# FASCICULE DE BREVET EUROPEEN

(11) **EP 1 720 677 B1**
(45) Date de publication et mention de la délivrance du brevet: **08.08.2007**
(21) Numéro de dépôt: 05739639.2
(22) Date de dépôt: 01.03.2005
(51) Int. Cl.: B23B 27/10, B23B 27/00, B23Q 11/10, B23Q 1/00, B23B 29/04

(54) **OUTIL DE TOURNAGE**
DREHMASCHINENWERKZEUG
LATHE TOOL

(30) Priorité: 01.03.2004 FR 0450402
(43) Date de publication de la demande: 15.11.2006
(73) Titulaire: Société Commerciale Rusch, 67110 Niederbonn-Les-Bains (FR)
(72) Inventeur: BASCH, Alexandre, F-67110 Niederbonn-Les-Bains (FR)
(74) Mandataire: Nuss, Pierre
(86) Numéro de dépôt international: PCT/FR2005/050135
(87) Numéro de publication internationale: WO 2005/084856

(56) Documents cités:
- EP-A- 0 579 371
- DE-U1- 20 106 205
- US-A- 3 460 410
- US-A1- 2002 094 245
- US-B1- 6 200 073

## Description

L'invention concerne un outil de tournage de type monobloc pour alésage de section inférieure à 10 mm comportant un corps d'outil sensiblement cylindrique prévu pour être engagé et maintenu dans un support d'outil traversé d'au moins un canal d'alimentation en lubrifiant, ce corps d'outil étant prolongé, à une extrémité, par un col se terminant par une tête comportant une arête de coupe et constituant la partie active de l'outil.

Un exemple est décrit par US 2002/0094245 A.

La présente invention trouvera son application dans le domaine de l'outillage pour usinage, plus particulièrement celui des outils de tournage de type monobloc, par opposition aux outils dont en particulier l'arrête de coupe est définie par une pièce rapportée, sur le col de l'outil par soudure, brasage ou toutes autres fixations mécaniques.

A ce propos, l'invention concerne les outils de tournage pour alésage de section inférieure à 10 mm.

L'on connaît d'ores et déjà de nombreux outils de tournage répondant à la description ci-dessus et comportant un corps d'outil prévu pour être engagé et maintenu dans un support d'outil auxquels sont associés des moyens de serrage dudit outil de tournage, ainsi que des moyens d'alimentation en lubrifiant.

Justement, la tenue dans le temps de l'outil, plus particulièrement sa partie active que constitue une tête à l'extrémité d'un col prolongeant le corps d'outil, dépend, le plus souvent, de la qualité de lubrification.

Plus précisément, dans le cas d'usinage de précision, par exemple, d'un alésage de diamètre réduit ou encore lors de la réalisation dans un tel alésage de faible section, soit d'une gorge, soit d'un filetage, l'on rencontre d'énormes difficultés pour acheminer convenablement le lubrifiant jusqu'à la zone d'usinage.

Ainsi, si l'on prend le cas d'outils de tournage connus comportant une tête de section au plus égale au corps d'outil et sensiblement centrée sur l'axe longitudinal de ce dernier, le fluide de lubrification, lorsqu'il est acheminé au travers du support d'outil, a quelque peu du mal à atteindre leur partie active d'usinage.

En particulier, le fluide de lubrification, amené au travers du support d'outil, est nécessairement projeté en dehors de ce dernier à une distance de l'axe du corps d'outil correspondant au moins au rayon de ce dernier. Or, lorsque la tête de l'outil de tournage est de section inférieure à ce corps d'outil, sa partie active, à savoir son bord de coupe se situe, lui, à une distance de cet axe du corps d'outil qui est inférieure au rayon de ce dernier. En somme, cette partie active de l'outil ne se situe pas dans le prolongement direct du flux de lubrifiant.

Aussi, ce fluide de lubrification peut être simplement projeté sur la face avant d'une pièce en cours d'alésage, par exemple.

Pour rapprocher le flux de lubrifiant de l'axe de ce corps d'outil, dont la section est plus importante à celle de la tête, l'on a pensé à usiner une rainure en périphérie du corps d'outil ou encore à percer ce dernier d'un canal. Ainsi, l'on vient acheminer le lubrifiant directement au travers de l'outil de tournage.

Evidemment, cette rainure et/ou ce ou ces perçages dans le corps d'outil nécessitent une reprise de l'outil de tournage lors de sa conception. Autrement dit, il s'agit d'une opération d'usinage additionnelle qui représente un surcoût de fabrication non négligeable.

Dans certains cas, il a encore été imaginé de conférer au corps d'outil une section particulière pour lui permettre d'être traversée par un canal d'alimentation en lubrifiant.

Là encore, en s'écartant d'une forme sensiblement cylindrique pour ce corps d'outil pour retenir un profil plus spécifique, il en résulte un coût de fabrication plus élevé.

Pour répondre à ce problème de lubrification, d'autres ont tout simplement pensé adapter la section du corps d'outil à celle de la tête. Par exemple pour un outil d'alésage, comportant une tête sensiblement ajustée à la section de l'alésage à réaliser, le corps de cet outil est lui-même adapté à cette section d'alésage.

Tout en traversant le support d'outil, le lubrifiant peut être pulvérisé immédiatement en périphérie du corps d'outil, soit sensiblement dans le prolongement de l'arête de coupe de la tête dont la section est identique.

Evidemment, dans ce cas l'utilisateur doit disposer d'autant de supports d'outils que de corps d'outil de sections différentes.

Finalement, la présente invention a su apporter une réponse au problème précité. Par son intermédiaire il est possible de réaliser un outil de tournage dont le coût de fabrication n'est pas grevé par une quelconque reprise d'usinage pour la conception d'une rainure ou d'un canal d'amenée de fluide lubrifiant. Par ailleurs, le corps de cet outil peut être choisi de section standard. En particulier, sa section n'est pas nécessairement ajustée à la tête de l'outil pour assurer une parfaite lubrification de cette dernière.

Ainsi, l'invention concerne, tout d'abord, un outil de tournage de type monobloc pour alésage de section inférieure à 10 mm comportant un corps d'outil sensiblement cylindrique prévu pour être engagé et maintenu dans un support d'outil traversé d'au moins un canal d'alimentation en lubrifiant, ce corps d'outil étant prolongé, à une extrémité, par un col se terminant par une tête comportant une arête de coupe et constituant la partie active de l'outil. De manière particulière et dans un souci de lubrification, le col est excentré par rapport à l'axe du corps d'outil, tandis que la tête, à l'extrémité de ce col, est elle-même excentrée par rapport à cet axe, ladite tête, avec son arête de coupe, étant inscrite et sensiblement tangente en périphérie d'un espace cylindrique correspondant au prolongement dudit corps d'outil.

L'invention concerne encore un ensemble d'usinage comportant un outil de tournage de type monobloc pour alésage de section inférieure à 10 mm et un support d'outil comportant, à une extrémité avant, un évidement ajusté pour la réception du corps de l'outil de tournage, ainsi que des moyens de serrage pour le maintien de ce dernier dans ledit évidement, ce support d'outil étant encore traversé d'au moins un canal d'alimentation en lubrifiant, caractérisé par le fait que ledit canal débouche à l'extrémité avant du support d'outil en périphérie à l'évidement de réception du corps d'outil, lequel est prolongé par un col excentré par rapport à l'axe de ce corps d'outil et se terminant par une tête comportant une arête de coupe constituant la partie active de l'outil, cette tête étant elle-même excentrée par rapport cet axe, ladite tête, avec son arête de coupe, étant inscrite et sensiblement tangente en périphérie d'un espace cylindrique correspondant au prolongement dudit corps d'outil.

Ainsi, dans un souci de lubrification cette arête de coupe est sensiblement tangente à l'espace cylindrique correspondant au prolongement du corps d'outil. De ce fait, cette arête de coupe se trouve dans le prolongement immédiat du flux de lubrifiant en sortie de l'extrémité du support d'outil.

La présente invention sera mieux comprise à la lecture de la description qui va suivre se rapportant au dessin ci-joint illustrant un exemple de réalisation.
- la figure 1 est une représentation schématisée et en coupe longitudinale d'un support d'outil conforme à l'invention et recevant un outil de tournage, là encore conçu selon l'invention ;
- la figure 2 est une représentation schématisée de droite de la figure 1 ;
- la figure 3 est une représentation schématisée et en coupe longitudinale du support d'outil.

Conformément aux figures du dessin ci-joint, la présente invention concerne le domaine des outils de tournage de type monobloc pour alésage de section inférieure à 10 mm.

Un tel outil de tournage 1 comporte un corps d'outil 2 sensiblement cylindrique et se prolongeant, à une extrémité 3, par un col 4. Celui-ci se termine par une tête 5 présentant une arête de coupe constituant la partie active de l'outil de tournage 1.

Ainsi par monobloc il est entendu que le corps de l'outil 2, son col 4 et sa tête 5, avec son arête coupante, ne forme qu'une seule pièce réalisée dans un même matériau.

Tout particulièrement et selon l'invention, le col 4 et la tête 5 de l'outil 1 à l'extrémité de ce col 4 sont excentrés par rapport à l'axe du corps d'outil 2. Cependant ladite tête 5 reste inscrite dans un espace cylindrique 7 défini dans le prolongement de ce corps d'outil 2.

De manière essentielle, dans un souci de lubrification, cette tête 5, avec son arête de coupe 6, tout en répondant à la condition ci-dessus, est sensiblement tangente à la périphérie 8 de cet espace cylindrique 7.

En fait, elle s'en trouve légèrement en retrait sur une distance 9 d'au moins un centième de millimètres.

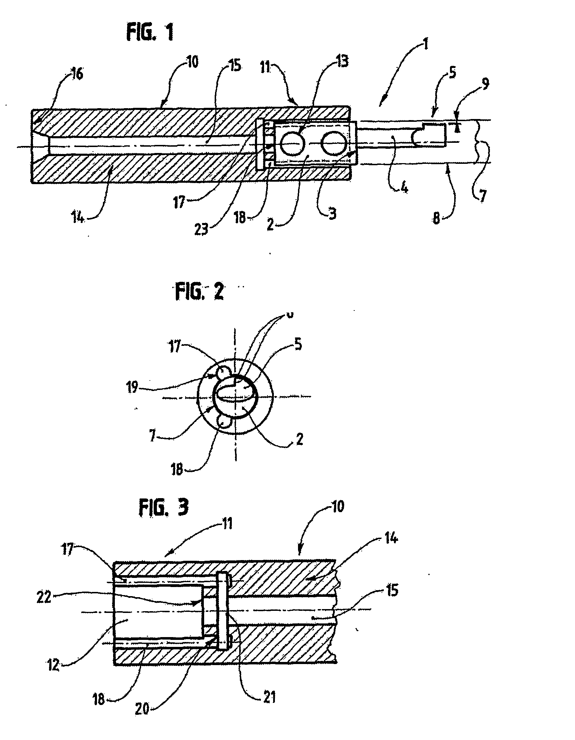

L'on comprend bien qu'en venant, de cette manière, pulvériser le lubrifiant axialement et de manière tangentielle au corps d'outil 2, comme cela a été illustré schématiquement dans la figure 1, ce lubrifiant peut directement atteindre la tête d'outil 5.

Pour en revenir au support d'outil 10, il comporte, à une extrémité avant 11, un évidement 12 ajusté pour la réception du corps d'outil 2, avec cet évidement 12 communiquant des moyens de serrage 13 représentés par deux cercles dans la figure 1.

De tels moyens de serrage 13, par exemple des vis, sont prévus pour maintenir parfaitement l'outil de tournage 1 dans le support d'outil 10 en cours d'usinage.

On notera d'ailleurs que des moyens d'indexage sont prévus pour s'assurer de la bonne position angulaire du corps 2 de l'outil 1 dans le support d'outil 10. En fait, il est recherché une bonne répétitivité du positionnement de la partie active, à hauteur de coupe au centre par exemple, donc du positionnement de l'arête de coupe de l'outil 1, d'où dépend la précision de l'usinage ultérieur. Le positionnement adéquat permet également un bon arrosage par le lubrifiant de l'arête de coupe.

Selon l'invention, ces moyens d'indexage sont définis, d'une part, par lesdits moyens de serrage 13 et, d'autre part, par au moins un méplat en périphérie du corps d'outil 2. Ainsi, au moment du serrage par les vis sur ledit méplat, il en résulte un repositionnement angulaire de l'outil 1 dans le support d'outil 10.

Celui-ci est encore traversé d'au moins un canal 14 d'alimentation en lubrifiant sachant que ce canal 14 débouche à l'extrémité avant 11 de ce support d'outil 10 en périphérie à l'évidement 12 de réception du corps d'outil 2.

Comme cela est visible dans les figures 1 et 3, le canal d'alimentation en lubrifiant 14 comporte un tronçon principal 15 communiquant avec des moyens d'alimentation en lubrifiant à l'extrémité arrière 16 du support d'outil 10. Il est raccordé, par ailleurs, à au moins un canal de pulvérisation 17, 18 s'étendant en périphérie à l'évidement 12 et tangentiellement au corps de l'outil 2.

Selon l'invention, ce ou ces canaux de pulvérisation 17, 18, sont communicants avec cet évidement 12.

Ils peuvent être réalisés par des perçages axiaux 19, comme visible dans la figure 2, ou tout simplement par des rainures longitudinales s'étendant le long de la paroi interne à l'évidement 12.

Le tronçon principal 15 du canal 14 d'alimentation en lubrifiant, s'étend, sur le mode de réalisation illustré, axialement le long du support d'outil 10, la communication avec les canaux de pulvérisation 17, 18 s'effectuant au travers d'une gorge circulaire 21, à l'arrière de l'évidement 12 de réception de l'outil de tournage.

De manière tout particulièrement avantageuse, dans le fond de l'évidement 12 est réalisé un siège de référence 22 sur lequel vient en butée l'extrémité arrière 23 du corps d'outil 2 garantissant le positionnement axial de ce dernier dans ledit support d'outil 10.

A noter que le support d'outil 10 et l'outil de tournage 1 comportent, préférentiellement, des moyens d'indexation du positionnement angulaire de ce dernier dans l'évidement 12. Quant aux canaux de pulvérisation 17, 18, ils sont implantés en périphérie de l'évidement 12 de manière à pulvériser le lubrifiant sensiblement à l'avant de l'arête de coupe 6 de la tête 5. Ainsi, cette implantation des canaux de pulvérisation 17, 18 dépend du sens de travail de l'outil de tournage, à gauche ou à droite.

## Revendications

1. Outil de tournage de type monobloc pour alésage de section inférieure à 10 mm comportant un corps d'outil (2) sensiblement cylindrique prévu pour être engagé et maintenu dans un support d'outil (10) traversé d'au moins un canal d'alimentation en lubrifiant, ce corps d'outil (2) étant prolongé, à une extrémité (3), par un col (4) se terminant par une tête (5) comportant une arête de coupe (6) et constituant la partie active de l'outil (1), **caractérisé par le fait que** le col (4) est excentré par rapport à l'axe du corps d'outil (2), tandis que la tête (5), à l'extrémité de ce col (4), étant elle-même excentrée par rapport à cet axe, ladite tête (5), avec son arête de coupe (6), étant inscrite et sensiblement tangente en périphérie (8) d'un espace cylindrique (7) correspondant au prolongement dudit corps d'outil (2).

2. Outil de tournage selon la revendication 1, **caractérisé par le fait que** la tête (5) se trouve en retrait d'au moins un centième de millimètres de la périphérie (8) de l'espace cylindrique (7).

3. Ensemble d'usinage comportant un outil de tournage (1) de type monobloc pour alésage de section inférieure à 10 mm et un support d'outil (10) comportant, à une extrémité avant (11), un évidement (12) ajusté pour la réception du corps (2) de l'outil de tournage (1), ainsi que des moyens de serrage (13) pour le maintien de ce dernier dans ledit évidement (12), ce support d'outil (10) étant encore traversé d'au moins un canal d'alimentation en lubrifiant (14), **caractérisé par le fait que** ledit canal (14) débouche à l'extrémité avant (11) du support d'outil (10) en périphérie à l'évidement (12) de réception du corps d'outil (2) lequel et prolongé par un col (4) excentré par rapport à l'axe de ce corps d'outil et se terminant par une tête (5) comportant une arête de coupe (6) constituant la partie active de l'outil (1), cette tête (5) étant elle-même excentrée par rapport cet axe, ladite tête (5), avec son arête de coupe (6), étant inscrite et sensiblement tangente en périphérie (8) d'un espace cylindrique (7) correspondant au prolongement dudit corps d'outil (2).

4. Ensemble d'usinage selon la revendication 3, **caractérisé par le fait que** le canal d'alimentation en lubrifiant (14) comporte un tronçon principal (15) communiquant avec des moyens d'alimentation en lubrifiant à l'extrémité arrière (16) du support d'outil (10) et raccordé à au moins un canal de pulvérisation (17, 18) s'étendant tangentiellement au corps de l'outil (2) dans l'évidement (12).

5. Ensemble-d'usinage selon la revendication 4, **caractérisé par le fait que** le ou les canaux de pulvérisation (17, 18) sont communicants avec l'évidement (12).

6. Ensemble d'usinage selon l'une quelconque des revendications 4 ou 5, **caractérisé par le fait que** le ou les canaux de pulvérisation (17, 18) sont constitués par des perçages axiaux (19).

7. Ensemble d'usinage selon la revendication 5, **caractérisé par le fait que** le tronçon principal (15) du canal (14) d'alimentation en lubrifiant est communicant avec les canaux de pulvérisation (17, 18) au travers d'une gorge circulaire (21), à l'arrière de l'évidement (12) de réception de l'outil de tournage (1).

8. Ensemble d'usinage selon l'une quelconque des revendications 3 à 7, **caractérisé par le fait que** le ou les canaux de pulvérisation (17, 18) sont implantés en périphérie de l'évidement (12), sensiblement à l'avant de l'arête de coupe (6) de la tête (5) en fonction du sens de travail de l'outil de tournage (1).

9. Ensemble d'usinage selon l'une quelconque des revendications 3 à 8, **caractérisé par le fait que** dans le fond de l'évidement (12) est réalisé un siège de référence (22) pour l'outil de tournage (1).

10. Ensemble d'usinage selon l'une quelconque des revendications 3 à 9, **caractérisé par le fait qu'**il comporte des moyens d'indexage de position angulaire du corps (2) de l'outil (1) dans le support d'outil (10).

11. Ensemble d'usinage selon la revendication 10, **caractérisé par le fait que** les moyens d'indexage sont définis, d'une part, par les moyens de serrage (13) et, d'autre part, par au moins un méplat en périphérie du corps d'outil (2) avec lequel sont prévus apte à coopérer lesdits moyens de serrage (13) .

## Claims

1. Lathe tool of the single piece type for boring with a cross-section less than 10 mm, comprising a substantially cylindrical tool body (2) provided to be engaged and held in a tool support (10) traversed by at least one lubricant supply channel, this tool body (2) being prolonged, at one end (3), by a neck (4) terminating in a head (5) comprising a cutting edge (6) and constituting the active portion of the tool (1),
**characterized by** the fact that the neck (4) is eccentric relative to the axis of the tool body (2), whilst the head (5), at the end of this neck (4), being itself eccentric relative to this axis, said head (5), with its cutting edge (6), being inscribed in and substantially tangent to a periphery (8) of a cylindrical space (7) corresponding to the prolongation of said tool body (2).

2. Lathe tool according to claim 1, **characterized by** the fact that the head (5) is located back at least a hundredth of a millimeter from the periphery (8) of the cylindrical space (7).

3. Machining assembly comprising a lathe tool (1) of the single piece type for boring with a cross-section less than 10 mm and a tool support (10) comprising, at one forward end (11), a recess (12) suitable for the reception of the body (2) of the lathe tool (1), as well as gripping means (13) for holding this latter in said recess (12), this tool support (10) being also traversed by at least one lubricant supply channel (14), **characterized by** the fact that said channel (14) opens at the forward end (11) of the tool support (10) at the periphery of the recess (12) for reception of the tool body (2) which is prolonged by a neck (4) eccentric to the axis of this tool body and terminating in a head (5) comprising a cutting edge (6) constituting the active portion of the tool (1), this head (5) being itself eccentric to this axis, said head (5), with its cutting edge (6), being inscribed in and substantially tangent to the periphery (8) of a cylindrical space (7) corresponding to the prolongation of said tool body (2).

4. Machining assembly according to claim 3, **characterized by** the fact that the lubricant supply channel (14) comprises a principal section (15) communicating with lubricant supply means at the rear end (16) of the tool support (10) and connected to at least one spray channel (17, 18) extending tangentially to the tool body (2) in the recess (12).

5. Machining assembly according to claim 4, **characterized by** the fact that the spray channel or channels (17, 18) communicate with the recess (12).

6. Machining assembly according to any one of claims 4 or 5, **characterized by** the fact that the spray channel or channels (17, 18) are constituted by axial piercings (19).

7. Machining assembly according to claim 5, **characterized by** the fact that the principal section (15) of the lubricant supply channel (14) communicates with the spray channels (17, 18) through a circular throat (21), at the rear of the recess (12) for reception of the lathe tool (1).

8. Machining assembly according to any one of claims 3 to 7, **characterized by** the fact that the spray channel or channels (17, 18) are implanted in the periphery of the recess (12), substantially before the cutting edge (6) of the head (5) as a function of the working direction of the lathe tool (1).

9. Machining assembly according to any one of claims 3 to 8, **characterized by** the fact that in the bottom of the recess (12) is provided a reference seat (22) for the lathe tool (1).

10. Machining assembly according to any one of claims 3 to 9, **characterized by** the fact that it comprises indexing means for the angular position of the body (2) of the tool (1) in the tool support (10).

11. Machining assembly according to claim 10, **characterized by** the fact that the indexing means are defined, on the one hand, by the gripping means (13) and, on the other hand, by at least one flat on the periphery of the tool body (2) with which said gripping means (13) are adapted to coact.

## Patentansprüche

1. Einstückiges Drehwerkzeug zum Bohren mit einem Querschnitt von weniger als 10 mm, das einen im Wesentlichen zylindrischen Werkzeugkörper (2) umfasst, der ausgelegt ist, um mit einer Werkzeughalterung (10) verbunden und darin gehalten zu werden, die von wenigstens einem Schmiermittelversorgungskanal durchdrungen ist, wobei dieser Werkzeugkörper (2) an einem Ende (3) durch einen Hals (4) verlängert ist, der in einem Kopf (5) endet, welcher eine Schneidkante (6) aufweist und den aktiven Teil des Werkzeugs (1) bildet, **dadurch gekennzeichnet, dass** der Hals (4) bezüglich der Achse des Werkzeugkörpers (2) exzentrisch ist, während der Kopf (5) am Ende des Halses (4) selbst bezüglich dieser Achse exzentrisch ist, wobei der Kopf (5) mit seiner Schneidkante (6) eingeschrieben in einen und im Wesentlichen tangential zu einem Umfang (8) eines zylindrischen Raums (7) ist, der der Verlängerung des Werkzeugkörpers (2) entspricht.

2. Drehwerkzeug nach Anspruch 1, **dadurch gekennzeichnet, dass** der Kopf (5) um wenigstens ein Hundertstel eines Millimeters des Umfangs (8) des zylindrischen Raumes zurückgesetzt angeordnet ist.

3. Bearbeitungseinheit, die ein einstückiges Drehwerkzeug zum Bohren mit einem Querschnitt von weniger als 10 mm und eine Werkzeughalterung (10) umfasst, die an einem vorderen Ende (11) eine Aussparung (12), die zur Aufnahme des Körpers (2) des Drehwerkzeugs (1) eingestellt ist, sowie Einspannmittel (13) zum Halten des letzteren in der Aussparung (12) umfasst, wobei diese Werkzeughalterung (10) ferner von wenigstens einem Schmiermittelversorgungskanal (14) durchdrungen ist, **dadurch gekennzeichnet, dass** der Kanal (14) an dem vorderen Ende (11) der Werkzeughalterung (10) im Umfang in der Aufnahmeaussparung (12) des Werkzeugkörpers (2) mündet, das um einen Hals (4) verlängert ist, der bezüglich der Achse dieses Werkzeugkörpers exzentrisch ist und durch einen Kopf (5) endet, der eine Schneidkante (6) bildet, die den aktiven Teil des Werkzeugs (1) bildet, wobei dieser Kopf (5), der selbst bezüglich der Achse exzentrisch ist, wobei der Kopf (5) mit seiner Schneidkante (6) eingeschrieben in einen und im Wesentlichen tangential zu einem Umfang (8) eines zylindrischen Raumes (7) ist, der der Verlängerung des Werkzeugkörpers (2) entspricht.

4. Bearbeitungseinheit nach Anspruch 3, **dadurch gekennzeichnet, dass** der Schmiermittelversorgungskanal (14) einen Hauptabschnitt (15) umfasst, der an dem hinteren Ende (16) der Werkzeughalterung (10) mit den Schmiermittelversorgungsmitteln und mit wenigstens einem Zerstäubungskanal (17, 18), der sich tangential zu dem Werkzeugkörper (2) in der Aussparung (12) erstreckt, verbunden ist.

5. Bearbeitungseinheit nach Anspruch 4, **dadurch gekennzeichnet, dass** der Zerstäubungskanal (17, 18) oder die Zerstäubungskanäle (17, 18) mit der Aussparung (12) verbunden sind.

6. Bearbeitungseinheit nach einem der Ansprüche 4 oder 5, **dadurch gekennzeichnet, dass** der Zerstäubungskanal (17, 18) oder die Zerstäubungskanäle (17, 18) durch axiale Durchgangsbohrungen (19) gebildet ist bzw. sind.

7. Bearbeitungseinheit nach Anspruch 5, **dadurch gekennzeichnet, dass** der Hauptabschnitt (15) des Schmiermittelversorgungskanals (14) mit den Zerstäubungskanälen (17, 18) über eine ringförmige Nut (21) hinter der Aufnahmeaussparung (12) des Drehwerkzeugs (1) verbunden ist.

8. Bearbeitungseinheit nach einem der Ansprüche 3 bis 7, **dadurch gekennzeichnet, dass** der Zerstäubungskanal (17, 18) oder die Zerstäubungskanäle (17, 18) entlang des Umfangs der Aussparung (12), im Wesentlichen vor der Schneidkante (6) des Kopfes (5) in Abhängigkeit der Arbeitsrichtung des Drehwerkzeugs (1) angeordnet ist bzw. sind.

9. Bearbeitungseinheit nach einem der Ansprüche 3 bis 8, **dadurch gekennzeichnet, dass** im Boden der Aussparung (12) ein Bezugssitz (22) für das Drehwerkzeug (1) verwirklicht ist.

10. Bearbeitungseinheit nach einem der Ansprüche 3 bis 9, **dadurch gekennzeichnet, dass** sie Indexierungsmittel zur Winkelpositionierung des Körpers (2) des Werkzeugs (1) in der Werkzeughalterung (10) umfasst.

11. Bearbeitungseinheit nach Anspruch 10, **dadurch gekennzeichnet, dass** die Indexierungsmittel einerseits durch die Einspannmittel (13) und andererseits durch eine Abflachung entlang des Umfangs des Werkzeugkörpers (2), mit der die Einspannmittel (13) vorgesehen sind, um zusammenwirken zu können, definiert sind.
